# EUROPÄISCHE PATENTANMELDUNG

(11) **EP 3 758 310 A1**
(43) Veröffentlichungstag der Anmeldung: **30.12.2020**
(21) Anmeldenummer: 19183369.8
(22) Anmeldetag: 28.06.2019
(51) Int. Cl.: H04L 12/727, H04L 12/729, H04L 12/717, H04L 12/911, H04L 12/935

(54) **VERFAHREN ZUR DATENKOMMUNIKATION, NETZWERKSTEUEREINRICHTUNG, NETZWERK, COMPUTERPROGRAMM UND COMPUTERLESBARES MEDIUM**

(71) Anmelder: Siemens Aktiengesellschaft, 80333 München (DE)
(72) Erfinder: Steindl, Günter, 92284 Poppenricht (DE)

(57) **Zusammenfassung**

Die Erfindung betrifft ein Verfahren zur Datenkommunikation in einem Netzwerk, bei dem
a) eine Information über Stream-Kommunikationsbeziehungen zwischen jeweils zwei Stream-Kommunikationspartnern (A, B, Y1-Y3, Z1-Z5), zwischen denen Streamdaten auf einem Pfad (P1, P2) in dem Netzwerk übertragen werden sollen, vorab bereitgestellt wird,
b) die zu diesen bekannten Stream-Kommunikationsbeziehungen gehörigen, jeweils die zwei Stream-Kommunikationspartner (A, B, Y1-Y3, Z1-Z5) verbindenden Pfade auf Bedarf jeweils dann etabliert werden, wenn eine entsprechende Anfrage insbesondere von einem der beiden Stream-Kommunikationspartner (A, B, Y1-Y3, Z1-Z5) der jeweiligen Stream-Kommunikationsbeziehung gestellt wird, und
c) für die Stream-Kommunikationsbeziehungen jeweils die maximalen Verzögerungen, von denen die Stream-Datenpakete an den Sendeports (P) der beteiligten Netzwerkknoten (B1-B5) betroffen sein können, ermittelt werden, wobei die Ermittlung der Verzögerungen unter Betrachtung der sich infolge der bekannten Stream-Kommunikationsbeziehungen maximal ergebenden Belegungen an den beteiligten Sendeports (P) erfolgt.

Darüber hinaus betrifft die Erfindung eine Netzwerksteuereinrichtung, ein Netzwerk, ein Computerprogramm und ein computerlesbares Medium.

## Beschreibung

Die Erfindung betrifft ein Verfahren zur Datenkommunikation in einem insbesondere industriellen AVB- bzw. TSN-Netzwerk mit mehreren Netzwerkknoten. Darüber hinaus betrifft die Erfindung eine Netzwerksteuereinrichtung, ein Netzwerk, ein Computerprogramm und ein computerlesbares Medium.

In industriellen Automatisierungssystemen sind in der Regel eine Vielzahl von Komponenten, etwa eine oder mehrere Steuerungen, verteilte IO-Geräte, die Sensoren und/oder Aktoren umfassen oder mit solchen verbunden sind, Peripheriegeräte etc. miteinander kommunikativ über ein Netzwerk verbunden. In diesem kann die Kommunikation unter Verwendung eines Kommunikationsprotokolls abgewickelt werden. In diesem Zusammenhang sei beispielhaft PROFINET (process field network) genannt. PROFINET ist der offene Industrial-Ethernet-Standard der PROFIBUS-Nutzerorganisation e. V. (PNO) für die Automatisierung.

Der Datenaustausch zwischen der oder den Steuerung(en), insbesondere IO-Controller(n) und den verteilten IO-Geräten erfolgt in der Regel über eine zyklische Kommunikation, wobei Datenpakete zyklisch insbesondere in Echtzeit übertragen werden.

In der IEEE sind durch die Erweiterungen der Arbeitsgruppe TSN (Time-Sensitive Networking) periodische bzw. zyklische Übertragungen, so genannte Streams, im Netzwerk besonders geschützt. Die TSN-Arbeitsgruppe (Time Sensitive Networking Taskgroup) ist dabei eine Nachfolgegruppe der AVB-Arbeitsgruppe (Audio/Video Bridging Taskgroup). Zu TSN gehört eine Vielzahl von Standards, rein beispielhaft sei in diesem Zusammenhang genannt Zeitsynchronisation (IEEE 802.1 AS-REV), Framepreemption (IEEE 802.1 Q-2018) und Reservierung (IEEE 802.1 Q-2018, IEEE 802.1 Qcc). Bekannt ist auch das Stream Reservation Protocol (SRP, siehe IEEE 802.1 Q-2018), mit dem Übertragungsressourcen dynamisch reserviert werden können und es möglich wird, Latenzzeiten zu garantieren. Für Streams kann mit einer erfolgreichen Reservierung, insbesondere durch eine automatische Konfiguration von SRP, eine gesicherte Übertragung innerhalb einer bestimmten maximalen Latenz garantiert werden.

Ein Sender wird im Rahmen von AVB bzw. TSN auch als Talker und ein Empfänger als Listener bezeichnet.

Die Kommunikation zwischen zwei Kommunikationsteilnehmern erfolgt entlang eines definierten, die beiden Teilnehmer verbindenden Pfades im Netzwerk. Unter einem Pfad ist mit anderen Worten ein Weg durch das Netz zu verstehen, auf bzw. entlang dem Daten, insbesondere Nutzdaten zwischen den beiden Kommunikationsteilnehmern zu übertragen sind bzw. im Anschluss an das Finden bzw. die Etablierung des Pfades übertragen werden. Man kann einen solchen Weg auch als Datenpfad bezeichnen. Es kann sinnvoll sein, für die Übertragung den kürzesten Pfad zu finden und zu nutzen, dies ist jedoch nicht zwingend erforderlich und nicht immer der Fall.

Um im Rahmen von TSN Garantien einhalten zu können, etwa, was eine maximale Latenz angeht, werden an den Egressports (Sendeports) der beteiligten, auf dem Pfad liegenden Netzwerkknoten der jeweiligen Kommunikationsbeziehung Übertragungsressourcen insbesondere via SRP reserviert. Netzwerkknoten können beispielsweise in Form von Bridges gegeben sein. Es kann sich auch um Geräte handeln, denen an sich eine andere Funktion zukommt, die jedoch zwei oder mehr Ports aufweisen und (auch) die Funktion eines Knotens übernehmen, insbesondere Daten weiterleiten können.

Die Einrichtung der Pfade in den einzelnen an der Weiterleitung beteiligten Geräten kann von einer zentralen Stelle bzw. Entität durchgeführt werden, die auch als zentralisierter Netzwerkkontroller (englisch: Centralized Network Controller, oder kurz CNC) bezeichnet wird. Der CNC kann dann jedem Gerät, welches mehr als einen Port aufweist, mitteilen, über welchen Port die Weiterleitung für die jeweilige Kommunikationsbeziehung, insbesondere den jeweiligen Stream zu erfolgen hat.

Für die deterministische Weiterleitung innerhalb eines bzw. des jeweiligen der beteiligten Netzwerkknoten ist es notwendig, die maximale Verzögerungszeit innerhalb des Knotens zu bestimmen. Neben der internen Verarbeitungszeit spielt dabei besonders die Datenmenge mit der gleichen Priorität (In-Class Interference) eine Rolle, da diese potentiell die Übertragung verzögern kann. Die Zeiten bis eine Streamübertragung gestartet werden kann, kann durch den Preemption-Mechanismus, dem Pausieren einer Datenübertragung mit geringerer Priorität und späteren Fortsetzung, beschleunigt werden. Innerhalb der Klasse müssen jedoch alle ankommenden Datenpakete/Frames mit der gleichen Priorität von allen anderen Ports berücksichtigt werden, da innerhalb der Klasse keine weitere Differenzierung erfolgt. Für den Fall, dass mehrere Streamklassen existieren, kann es auch erforderlich sein, die Datenmenge anderer Klassen höherer Priorität zu berücksichtigten (Inter-Class Interference), da diese ebenfalls vorher gesendet würden bzw. werden.

Ist weder das Netz noch der Kommunikationsbedarf, der insbesondere durch die Kommunikationsbeziehungen, das Aktualisierungsintervall und die Bandbreite festgelegt ist, bekannt, muss bei der inkrementellen Pfadetablierung gegen den Worst Case geprüft werden. Das heißt, an jedem Egressport (auch als Sende- bzw. Ausgangsport bezeichnet) auf dem Pfad muss angenommen werden, dass er maximal belegt sein wird, auch wenn nur ein Pfad über den Egressport etabliert wird. Maximale Belegung bedeutet dabei insbesondere, dass davon ausgegangen wird, dass an jedem Sendeport die (für die gegebenen Streamklasse) maximal mögliche Verzögerung auftritt. Im Worst-Case-Szenario ist davon auszugehen, dass an jedem Sendeport alle Pakete, die ggf. vorher dran sein können, tatsächlich zuerst gesendet würden. In diesem Zusammenhang kennt TSN die vorgenannten Größen In-Class Interference (deutsch: In-Class Interferenz) sowie Inter-Class Interferenz (deutsch: Inter-Class Interferenz).

Bei TSN ist in der Regel ein bestimmter Anteil insbesondere jedes Sendezyklus für Streamdaten vorgesehen und der Rest kann für den Best-Effort-Verkehr genutzt werden. Ist der vorgesehene Anteil für die Streamübertragung durch die aktuellen Kommunikationsbeziehungen bereits vollständig belegt, werden weitere Streams abgelehnt, da für diese keine Garantien mehr gegeben werden könnten.

Rein beispielhaft sei genannt, dass 20% jedes Sendezyklus für das Senden von Streamdatenpaketen vorgesehen sind. Zeichnet sich der Sendezyklus eines Netzwerkes beispielsweise durch eine Länge von 1 Millisekunde aus, stehen dann insbesondere die ersten 200 Mikrosekunden jedes Sendezyklus für die Übertragung von Streamdaten zur Verfügung. Bei einer Worts-Case-Betrachtung wäre für jeden Stream die maximal mögliche Verzögerung/Latenz an jedem Sendeport zu betrachten. Diese würde sich - unter der Annahme der vollen Belegung des Sendeports, also der Annahme, dass die für Streamdaten zur Verfügung stehende Ressource komplett genutzt wird - auf 200 Mikrosekunden abzüglich derjenigen Zeit belaufen, die benötigt wird, um ein Paket (maximaler Größe) des betrachteten Streams bzw. der betrachteten Kommunikationsbeziehung zu senden, für welche die Latenzberechnung erfolgt. Werden die für die Streamübertragung maximal vorgesehenen 200 Mikrosekunden von den tatsächlich bestehenden Kommunikationsbeziehungen im Betrieb nicht vollständig genutzt, erhält man über die Worts-Case-Betrachtung eine maximale Latenz, die - ggf. deutlich - oberhalb der tatsächlichen liegt und eigentlich freie Ressourcen können nicht genutzt werden.

Ohne Kenntnis über die Kommunikationsbeziehungen kann bisher nur über die Worst-Case-Betrachtung sichergestellt werden, dass noch hinzukommende, später etablierte Pfade bereits existierende Pfade nicht stören. Damit ergibt sich ein im Vergleich zu derzeitigen Feldbussen extrem großer Aktualisierungsintervall oder ein extrem großer Bandbreitenbedarf. Die Flexibilität, die dadurch erhalten wird, dass durch die Worst-Case-Betrachtung jede mögliche Änderung bereits vorweg berücksichtigt wird, wird mit einer schlechten Performance erkauft.

Eine Alternative könnte nach Auffassung der Anmelderin darin besteht darin, dass alle Stream-Kommunikationsbeziehungen vorab bekannt sind bzw. bekannt gemacht werden und alle Pfade vorab, insbesondere bei der initialen Einrichtung des Netzwerkes noch vor der eigentlichen Datenübertragung, statisch geladen und etabliert werden, wobei die tatsächliche, sich infolge der bekannten Kommunikationsbeziehungen ergebenden Verzögerungen, insbesondere über die bzw. unter Berücksichtigung der In-Class Interference und/oder Inter-Class Interference berechnet werden. Dann dürfen jedoch keine weiteren Stream-Kommunikationsbeziehungen mehr hinzukommen. Diese Lösung wäre somit rein statisch und würde keinerlei Flexibilität bieten. Jede Änderung würde zu einer kompletten Neuberechnung führen. Hierfür wird die Kommunikation komplett heruntergefahren uns wird alles neu berechnet, insbesondere werden alle Pfade neu bestimmt und es erfolgt eine erneute Prüfung, ob es noch funktioniert, was mit erheblichem Aufwand verbunden ist.

Es ist daher eine Aufgabe der vorliegenden Erfindung, ein Verfahren zur Datenkommunikation in einem insbesondere industriellen Netzwerk anzugeben, welches eine optimale Nutzung vorhandener Ressourcen und gute Perfomance ermöglicht und gleichzeitig Flexibilität bietet.

Diese Aufgabe wird gelöst durch ein Verfahren zur Datenkommunikation in einem insbesondere industriellen AVB- bzw. TSN-Netzwerk mit mehreren Netzwerkknoten, bei dem
a) eine Information über Stream-Kommunikationsbeziehungen zwischen jeweils zwei Stream-Kommunikationspartnern, zwischen denen Streamdaten auf einem Pfad in dem Netzwerk übertragen werden sollen, vorab bereitgestellt wird,
b) die zu diesen bekannten Stream-Kommunikationsbeziehungen gehörigen, jeweils die zwei Stream-Kommunikationspartner verbindenden Pfade auf Bedarf jeweils dann etabliert werden, wenn eine entsprechende Anfrage insbesondere von einem der beiden Stream-Kommunikationspartner der jeweiligen Stream-Kommunikationsbeziehung gestellt wird, und
c) für die Stream-Kommunikationsbeziehungen jeweils die maximalen Verzögerungen, von denen die Stream-Datenpakete an den Sendeports der beteiligten Netzwerkknoten betroffen sein können, ermittelt werden, wobei die Ermittlung der Verzögerungen unter Betrachtung der sich infolge der bekannten Stream-Kommunikationsbeziehungen maximal ergebenden Belegungen an den beteiligten Sendeports erfolgt.

Die Problematiken, die mit den der Anmelderin bekannten bisherigen Lösungen verbunden sind, können damit umgangen werden, dass dem Netz die Stream-Kommunikationsbeziehungen vorab zur Verfügung gestellt werden, die Etablierung der Pfade jedoch weiterhin inkrementell erfolgt. Wenn Offline die Topologie und die "festen" Kommunikationsbeziehungen bekannt sind, kann deren Bandbreitenbedarf bestimmt werden. Die erfindungsgemäße Lösung kombiniert mit anderen Worten die inkrementelle Etablierung der Pfade und damit die Nutzung des Netzes mit der Performance einer statischen Lösung. Erhalten wird ein Kompromiss, der beide Aspekte vereint und damit eine wohldefinierte Dynamik mit Performance verbindet.

Unter inkrementeller Etablierung der Pfade ist insbesondere zu verstehen, dass Pfade nach und nach, insbesondere jeweils auf Bedarf, wenn etwa wenigstens ein Kommunikationsteilnehmer anfragt, etabliert werden. Ist eine inkrementelle Pfadetablierung wie bei dem erfindungsgemäßen Verfahren vorgesehen, erfolgt, wenn weitere Stream-Kommunikationsbeziehungen hinzukommen, keine komplette Neuberechnung für alle Stream-Kommunikationsbeziehungen einschließlich der bisherigen, bereits bestehenden, sondern die bereits bestehenden Beziehungen werden unverändert belassen.

Die in Schritt a) bereitgestellte Information über Stream-Kommunikationsbeziehungen umfasst bevorzugt, wer an diesen beteiligt ist, also wer die beiden Kommunikationsteilnehmer der jeweiligen Beziehung sind, sowie wer an wen sendet, und/oder welche Datenmengen im Rahmen der jeweiligen Kommunikationsbeziehung zu übertragen ist, und/oder welches Aktualisierungsintervall der jeweiligen Kommunikationsbeziehung zugeordnet ist, und/oder welche maximale akkumulierte Latenz für die jeweilige Kommunikationsbeziehung erlaubt ist.

Wo sich die Teilnehmer befinden ist in der Regel bekannt, insbesondere einer zentralen Netzwerksteuerung, etwa einem CNC, der die Topologieinformation beispielsweise via LLDP (Link Layer Discovery Protocol, siehe IEEE 802.1AB) erhalten hat. Auf diese Information kann zugegriffen werden bzw. diese kann auch bereitgestellt werden.

Zwei Stream-Kommunikationspartner eines industriellen Netzwerkes können beispielsweise durch eine insbesondere speicherprogrammierbare Steuerung auf der einen Seite und einen Sensor, der Messdaten an diese über eine geschützte Verbindung senden muss, oder auch einen Aktor, der Stellwerte von dieser über eine geschützte Verbindung erhalten muss, auf der anderen Seite gegeben sein. Für die Übertragung von Messdaten bzw. Stellwerten enthaltenen Paketen (auch als Frames bezeichnet) von dem Sensor an die Steuerung bzw. von der Steuerung an den Aktor ist ein Pfad im Netzwerk zu etablieren, welcher die Steuerung und den Sensor verbindet. Auf dem Pfad liegen beteiligte Netzwerkknoten, welche die Datenpakete jeweils über einen ihrer Ports - der den Sendeport für diese Kommunikationsverbindung darstellt - weiterzuleiten haben.

Unter der Belegung der Sendeports ist insbesondere zu verstehen, welcher Anteil einer für Stream-Kommunikationsbeziehungen insgesamt vorgesehenen Netzwerkressource, beispielsweise welcher Anteil einer für Stream-Kommunikationsbeziehungen insgesamt vorgesehenen Bandbreite und/oder welcher Anteil eines für Stream-Kommunikationsbeziehungen insgesamt vorgesehenen Zeitfensters bereits belegt ist.

Die Belegungen, die sich für die bekannten Stream-Kommunikationsbeziehungen ergeben, können ermittelt, insbesondere berechnet werden. Dies kann bevorzugt durch einen zentralen Netzwerkkontroller (CNC) erfolgen. Die Informationen bzw. Daten zu den Sendeportbelegungen liegen ferner bevorzugt in einem CNC vor.

Im Rahmen der Pfadetablierung wird in der Regel u.a. geprüft, ob eine für die gewünschte Kommunikationsbeziehung bzw. den gewünschten Stream maximal zulässige akkumulierte Latenz, insbesondere die Ende-zu-Ende-Latenz eingehalten werden kann. Unter der akkumulierten bzw. Ende-zu-Ende-Latenz ist insbesondere die Zeit zu verstehen, welche die Übertragung vom Talker zum Listener in Anspruch nimmt. In die akkumulierte Latenz fließen die Verzögerungen, welche in den einzelnen Netzwerkknoten durch Pakete verursacht werden bzw. würden, die ggf. vor dem zu der betrachteten Kommunikationsbeziehung gehörigen Paket zu senden sind, mit ein. Erfindungsgemäß werden nicht die Worts-Case-Verzögerungen, die auf der Annahme einer vollen Belegung der beteiligten Sendeports basieren, ermittelt, sondern es werden die realen Verzögerungen, die durch die sich für die bekannten Beziehungen ergebenden realen Belegungen bedingt sind bzw. würden, berücksichtigt. Die in Schritt a) bereitgestellte Information über die Stream-Kommunikationsbeziehungen macht es möglich, die sich real ergebenden Belegungen und die durch diese bedingten realen Verzögerungen in den Knoten zu ermitteln.

So ist im Rahmen der Etablierung der Pfade nicht gegen den Worst-Case, insbesondere die volle Belegung zu prüfen, sondern es kann eine Prüfung gegen die realen Belegungen erfolgen.

Die Pfadetablierung schließt bevorzugt ein, dass, sofern die Latenzprüfung erfolgreich ist, an den bzw. für die an einer Stream-Kommunikationsbeziehung, insbesondere einem Stream beteiligten Sendeports in den jeweiligen Knoten Einträge vorgenommen werden, insbesondere sogenannte Filtering-Database-Entries (FDB-Entries) und/oder Übertragungsressourcen reserviert werden. Die Einträge können in dem jeweiligen Netzwercknoten vorgenommen werden, bevorzugt dort gespeichert werden, insbesondere in der sogenannten Filtering-Datatbase (FDB). Dies kann von einer zentralen Netzwerksteuerung, etwa einem CNC durchgeführt werden. Es sei angemerkt, dass es auch nicht ausgeschlossen ist, dass eine dezentrale Lösung mit entsprechend angepasstem Reservierungs-Protokoll für die Ressourcen-Reservierung zum Einsatz kommt. Eine zentrale Lösung, etwa über einen CNC, ist jedoch bevorzugt.

Jeder Port eines Netzwerkknotens kann prinzipiell sowohl Sende- als auch Empfangsport sein bzw. sowohl als Sende- als auch als Empfangsport dienen. Die maximale Verzögerung/Latenz ist für einen Port zu ermitteln, wenn über diesen Daten weiterzuleiten/zu senden sind, also für einen Port, wenn diesem für die betrachtete Datenübertragung bzw. Stream-Kommunikationsverbindung die Rolle eines Sende- bzw. Ausgangs- bzw. Egressports zukommt. Betrachtet man einen Port als Sendeport, sind alle weiteren Ports des (jeweiligen) Knotens - in Bezug auf diesen Ports als Sendeport - mögliche Empfangsports, über die prinzipiell Daten ankommen könnten, die über den betrachteten Port (Sendeport) weiterzuleiten sind.

Ein Netzwerkknoten kann auch in ein Gerät, etwa ein Endgerät integriert sein. Endgeräte mit integriertem Netzwerkknoten sind in industriellen Netzwerken oftmals durch einfache Feldgeräte gegeben, die wenigstes einen Sensor und/oder wenigstens einen Aktor umfassen bzw. mit wenigstes einem Sensor und/oder wenigstens einem Aktor verbunden oder verbindbar sind, und bevorzugt einen integrierten Switch haben.

Ein Beispiel einer geschützten Verbindung ist ein Stream, wie er von der Audio/Video Bridging (AVB) Task Group und insbesondere von der Time-Sensitive Networking (TSN) Task Group in der internationalen Norm IEEE 802.1 festgelegt ist. Für eine geschützte Verbindung sind bzw. werden zweckmäßiger Weise in aus dem Stand der Technik vorbekannter Weise Ressourcen an den beteiligten Netzwerkknoten reserviert. Eine geschützte Verbindung bzw. ein Stream zeichnet sich insbesondere durch einen dieser zugeordneten eindeutigen Kenner, insbesondere einen Stream-Kenner bevorzugt in Form einer Stream-ID aus.

Eine besonders bevorzugte Ausführungsform des erfindungsgemäßen Verfahrens zeichnet sich dadurch aus, dass für einen oder mehrere Sendeports zumindest eines Netzwerkknotens eine zusätzliche Reserve-Belegung für wenigstens eine unbekannte, noch hinzukommende Stream-Kommunikationsbeziehung vorgesehen wird, und bei der Ermittlung der Verzögerungen sowohl die sich infolge der bekannten Stream-Kommunikationsbeziehungen maximal ergebenden Belegungen als auch die Reserve-Belegung oder die Reserve-Belegungen berücksichtigt werden.

Fügt man eine (definierte) Reserve für zum Erstellungszeitpunkt, etwa eines Projektes bzw. einer Maschine/Anlage, welche das Netzwerk und die bekannten Kommunikationsteilnehmer umfasst, noch unbekannte Stream-Kommunikationsbeziehungen hinzu, so kann die Unterstützung der Dynamik gut erhalten bleiben und gleichzeitig auf ein erforderliches Mindestmaß beschränkt werden.

Bevorzugt wird für einen oder mehrere Sendeports mehrerer Netzwerkknoten eine zusätzliche Reserve-Belegung vorgesehen, und bei der Ermittlung der Verzögerungen sowohl die sich infolge der bekannten Stream-Kommunikationsbeziehungen maximal ergebenden Belegungen als auch die Reserve-Belegungen berücksichtigt werden.

Es kann sein, dass für einen oder mehrere, ggf. alle Sendeports aller Netzwerkknoten eine zusätzliche Reserve-Belegung vorgesehen wird, und bei der Ermittlung der Verzögerungen sowohl die sich infolge der bekannten Stream-Kommunikationsbeziehungen maximal ergebenden Belegungen als auch die Reserve-Belegungen berücksichtigt werden.

Auch kann es sein, dass Reserve-Belegungen nicht an allen, sondern nur an einem oder mehreren bestimmten, fest vorgegebenen Ports eines oder mehrerer Netzwerkknoten vorgesehen werden.

Insbesondere für den Fall, dass nicht an allen Ports aller Netzwerkknoten eine zusätzliche Reserve-Belegung vorgesehen wird, sondern nur an einigen Ports, wird in weiterer zweckmäßiger Ausgestaltung der Anschluss weiterer Stream-Kommunikationsteilnehmer und/oder Netzwerkknoten nur an Ports zugelassen, für die eine zusätzliche Reserve-Belegung vorgesehen ist.

Besonders bevorzugt wenigstens ein Port wenigstens eines Netzwerkknotens als Docking-Port festgelegt und das Hinzukommen von weiteren Stream-Kommunikationsbeziehungen nur an dem bzw. über den wenigstens einen Docking-Port erlaubt. Für den bzw. an dem wenigstens einen Docking-Port wird zweckmäßiger Weise eine Reserve-Belegung vorgesehen.

An dem oder den zulässigen/designierten Docking-Ports bzw. Docking-Punkten können dann weitere Teilnehmer und/oder Knoten angeschlossen werden. Durch die Definition von Docking-Punkten für zusätzliche/neue/später hinzugefügte Geräte kann die Latenzberechnung noch weiter optimiert werden, da Bereiche des Netzes, die von neu angeschlossenen Geräten nicht betroffen sein können bzw. sind, keine Reserven brauchen. Docking-Ports sind zweckmäßiger Weise solche, die noch frei sind, an denen also noch kein Kommunikationsteilnehmer, etwa in Form eines Endgerätes, angeschlossen ist.

Ist wenigstens ein Docking-Ports festgelegt, werden Reserve-Belegungen bevorzugt zumindest für den/an dem wenigstens einen Docking-Port und für die/an den Sendeports vorgesehen, die auf dem bzw. den Pfaden liegen, die zu Stream-Kommunikationsbeziehungen gehören, die über den wenigstens einen Docking-Port hinzukommen (dürfen).

Ist eine räumlich eingegrenzte Reserve-Belegung erwünscht, wird, um entscheiden zu können, an welchen (Docking) Ports Reserve-Belegungen vorzusehen sind, zweckmäßiger Weise zu den unbekannte(n) Stream-Kommunikationsbeziehung, die später noch dynamisch hinzukommen kann (können), die Information bereitgestellt, wer an wen über diese senden will. So ist der zugehörige Pfad bekannt bzw. sind die zugehörigen Pfade bekannt und diejenigen Ports, an denen eine Reserve erforderlich ist, können bestimmt werden. Die später dynamisch noch hinzukommenden Stream-Kommunikationsbeziehungen werden auch in diesem Falle als zum Erstellungszeitpunkt "unbekannte" Beziehungen erachtet, weil für diesen nicht alle Informationen vorliegen (müssen), über das "wer sendet an wen" für die räumliche Eingrenzung der Reserve(n) hinausgehend beispielsweise nicht die zugehörige Datenmenge etc.

Als Reserve-Belegung kann beispielsweise ein fest vorgegebener Anteil einer für Stream-Kommunikationsbeziehungen insgesamt vorgesehenen Netzwerkressource, beispielsweise ein fest vorgegebener Anteil der für Stream-Kommunikationsbeziehungen insgesamt vorgesehenen Bandbreite vorgesehen werden. Beispielsweise können 10% der für die Stream-Kommunikation vorgesehenen Bandbreite als Reserve-Belegung angenommen bzw. festgelegt bzw. vorgesehen werden. Dieser zusätzliche Reserve-Anteil wird dann bei der Latenzberechnung berücksichtigt und steht für spätere weitere Stream-Kommunikationsbeziehungen zur Verfügung. Solche können dann hinzukommen, ohne die bereits bekannten Stream-Kommunikationsbeziehungen zu stören und ohne dass eine Unterbrechung der Kommunikation und komplette Neuberechnung erforderlich ist.

Anfragen für weitere, neu hinzukommende Stream-Kommunikationsbeziehungen, welche mit der Reserve-Belegung nicht auskommen, werden zweckmäßiger Weise abgelehnt.

Die Größe der Reserve-Belegung kann zweckmäßiger Weise im Lichte der für einen gegebenen Anwendungsfall schätzungsweise noch maximal erforderlichen hinzukommenden Stream-Kommunikationsbeziehungen bzw. Streams gewählt werden.

Es kann auch sein, dass für ausgewählte, erlaubte Docking-Punkte bzw. Docking-Stellen definierenden Sendeports eine Reserve-Belegung bis hin zur vollständigen Belegung vorgesehen wird. Dann muss zwar an den ausgewählten Stellen aufgrund der möglichen Maximalbelegung die Worst-Case-Betrachtung erfolgen. An diesen Stellen steht dann aber auch eine Flexibilität bis hin zur insgesamt für Stream-Kommunikation vorgesehen Belegung zur Verfügung. Dies kann insbesondere sinnvoll sein, wenn über einen Docking-Port viele Daten laufen müssen.

Weiterhin bevorzugt ist vorgesehen, dass im Rahmen der Etablierung eines Pfades für wenigsten eine Stream-Kommunikationsbeziehung, bevorzugt im Rahmen der Etablierung der Pfade für alle Stream-Kommunikationsbeziehungen, bei der Prüfung, ob die maximal zulässige Latenz eingehalten werden kann, die in Schritt c) unter Betrachtung der sich infolge der bekannten Stream-Kommunikationsbeziehungen maximal ergebenden Belegungen an den beteiligten Sendeports ermittelten maximalen Verzögerungen berücksichtigt werden.

Sofern Reserve-Belegungen vorgesehen sind, werden diese zweckmäßiger Weise ebenfalls berücksichtigt. Entsprechend zeichnet sich eine weitere ausführungsform dadurch aus, dass im Rahmen der Etablierung eines Pfades für wenigsten eine Stream-Kommunikationsbeziehung, bevorzugt im Rahmen der Etablierung der Pfade für alle Stream-Kommunikationsbeziehungen, bei der Prüfung, ob die maximal zulässige Latenz eingehalten werden kann, die in Schritt c) unter Betrachtung der sich infolge der bekannten Stream-Kommunikationsbeziehungen maximal ergebenden Belegungen und der Reserve-Belegungen an den beteiligten Sendeports ermittelten maximalen Verzögerungen berücksichtigt werden.

Darüber hinaus kann vorgesehen sein, dass in Schritt a) Informationen über sämtliche Stream-Kommunikationsbeziehungen bereitgestellt werden. Sind sämtliche Kommunikationsbeziehungen von Anfang an bekannt, muss kein "Puffer" für "unbekannte", ggf. noch hinzukommende Streams vorgehalten werden und auf Reserve-Belegungen kann in diesem Fall auch verzichtet werden.

Eine weitere Ausführungsform zeichnet sich dadurch aus, dass die In-Class Interferenz und/oder die Inter-Class Interferenz, insbesondere gemäß IEEE 802.1Qccberechnet und bei der Ermittlung der Verzögerungen, insbesondere als Belegungen der Sendeports bzw. eine diese repräsentierende Größe berücksichtigt werden.

Gegenstand der Erfindung ist auch eine Netzwerksteuereinrichtung, die zur Durchführung des erfindungsgemäßen Verfahrens ausgebildet und eingerichtet ist.

Die Erfindung betrifft des Weiteren ein Netzwerk, insbesondere für eine Automatisierungsanlage und/oder Fertigungsanlage, das zur Durchführung des erfindungsgemäßen Verfahrens ausgebildet und eingerichtet ist.

Das Netzwerk ist zweckmäßiger Weise Ethernet-fähig, es handelt sich insbesondere um ein Ethernet-basiertes Netzwerk. Insbesondere, damit geschützte Verbindungen, etwa Streams mit garantierter Dienstgüte (englisch: Quality of Service, QoS) unterstützt werden, ist das Netzwerk bzw. sind insbesondere zumindest die beteiligten Netzwerkknoten AVB- bzw. TSN-fähig, unterstützt bzw. unterstützen insbesondere die Einrichtung geschützter Verbindungen mit reservierten Netzwerkressourcen an den beteiligten Netzwerkknoten. AVB und TSN sind aus dem Stand der Technik hinlänglich vorbekannt.

Ein weiterer Gegenstand der vorliegenden Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Darstellung eines industriellen TSN-Netzwerkes mit mehreren Netzwerkknoten und zwei bestehenden sowie beispielhaft zwei Stream-Kommunikationsteilnehmer, die noch hinzukommen können;
- FIG 2: eine rein schematische Darstellung eines industriellen TSN-Netzwerkes mit mehreren Netzwerkknoten und zehn Stream-Kommunikationsteilnehmern; und
- FIG 3: eine rein schematische Darstellung eines industriellen TSN-Netzwerkes mit mehreren Netzwerkknoten und elf Stream-Kommunikationsteilnehmern, von denen zwei an Docking-Ports angeschlossen sind.

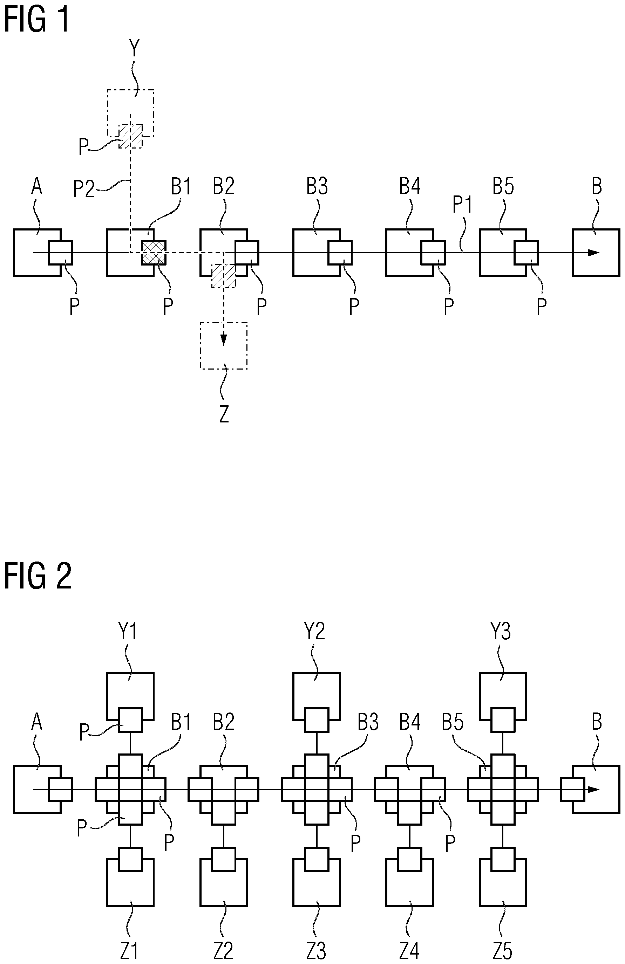

Die FIG 1 zeigt eine rein schematische Teildarstellung eines industriellen Ethernet-basierten Netzwerkes. Konkret sind von diesem fünf Netzwerkknoten B1-B5 dargestellt, die vorliegend durch Bridges gegeben sind, sowie insgesamt vier Endgeräte A, B, Y, Z, die über die Bridges B1-B5 miteinander verbunden sind.

Die Bridges B1-B5 sind TSN-fähig, unterstützen insbesondere die Einrichtung geschützter Verbindungen (Streams mit garantierte QoS). Im Zusammenhang mit TSN sei auf die hinlänglich vorbekannten Standards verwiesen, beispielsweise IEEE 802.1 Q, IEEE 802.1 Qcc, IEEE 802.1 AS-REV.

Es sei angemerkt, dass das industrielle TSN-Netzwerk selbstverständlich in an sich bekannter Weise eine Vielzahl weiterer, in der Teildarstellung gemäß FIG 1 nicht gezeigter Komponenten, etwa weitere Netzwerkknoten, Endgeräte und/oder andere Komponenten umfassen kann bzw. umfasst.

Die Endgeräte A und B stellen Stream-Kommunikationsteilnehmer einer ersten Stream-Kommunikationsbeziehung und die Endgeräte Y und Z Stream-Kommunikationsteilnehmer einer zweiten Stream-Kommunikationsbeziehung dar. Die beiden Endgeräte A und Y sind dabei sendende Teilnehmer (Talker), die periodisch Datenframes über eine geschützte Verbindung als TSN-Stream an den jeweiligen empfangenden Teilnehmer (Listener) B, Z senden möchten.

Der Übertragungsweg bzw. Pfad P1 vom Talker A zum Listener B geht über die Netzwerkknoten B1 bis B5. Der Übertragungsweg bzw. Pfad P2 vom Talker Y zum Listener Z geht nur über die Netzwerkknoten B1 und B2. Der in FIG 1 rechte Port P des Knotens B1 ist ein Sendeport für beide Stream-Kommunikationsbeziehungen. Dieser Port muss zu beiden Streams gehörige Datenpakte weiterleiten.

Bei den beiden Talkern A, Y handelt es sich vorliegend um speicherprogrammierbare Steuerungen einer nicht weiter dargestellten industriellen Automatisierungsanlage, die periodisch Steuersignale an Aktoren in Echtzeit übertragen möchten, damit über die Aktoren auf einen in der Figur ebenfalls nicht dargestellten industriellen Prozess eingewirkt werden kann. Die Listener B, Z sind durch IO-Geräte gegeben, die jeweils wenigstens einen Aktor umfassen oder mit einem solchen verbunden sind, der die Stellwerte benötigt. Es sei betont, dass dies rein beispielhaft zu verstehen ist, und sowohl Listener als auch Talker von Streams in industriellen Netzwerken alternativ oder zusätzlich auch durch andere Geräte bzw. Einheiten gegeben sein können, etwa Bildschirme, Eingabegeräte, Applikationen oder dergleichen.

Die empfangenen Listener Y und Z und die zugehörigen, durch einen jeweils die beiden Kommunikationsteilnehmer verbindenden Pfeil angedeutete Datenübertragung sind in der FIG 1 mit gestrichelter Linie dargestellt, da diese beispielhaft für Stream-Kommunikationsteilnehmer nebst zugehöriger Datenübertragung gezeigt sind, die noch hinzukommen könnten, insbesondere, nachdem für die Kommunikationsbeziehung von A und B schon ein Pfad etabliert wurde und Daten übertragen werden. Der etablierte Pfad zwischen P1 zwischen A und B ist durch einen Pfeil mit durchgezogener Linie angedeutet.

Bei TSN ist in der Regel ein bestimmter Anteil insbesondere jedes Sendezyklus für Streamdaten vorgesehen. Der Anteil des Sendezyklus stellt eine Größe dar, welche - im Lichte der Übertragungsgeschwindigkeit - einen vorgesehenen Anteil der Bandbreite repräsentiert. Der Rest jedes Sendezyklus (und somit der Rest der Bandbreite) kann für den Best-Effort-Verkehr genutzt werden. Bei dem dargestellten Ausführungsbeispiel beträgt der Sendezyklus 1 Millisekunde und es sind 20% jedes Sendezyklus für das Senden von Streamdatenpaketen vorgesehen. Vorliegend sind die ersten 200 Mikrosekunden jedes Sendezyklus für die Übertragung von Streamdaten bestimmt.

Ist der vorgesehene Anteil für die Streamübertragung durch die aktuellen Kommunikationsbeziehungen bereits vollständig belegt, werden angefragte weitere geschützte Verbindungen bzw. Streams abgelehnt, da für diese keine Garantien mehr gegeben werden können.

Für die deterministische Weiterleitung innerhalb eines bzw. des jeweiligen der beteiligten Netzwerkknoten B1- bis B5 ist es notwendig, die maximale Verzögerungszeit innerhalb der Knoten B1 bis B5 zu bestimmen. Neben der internen Verarbeitungszeit spielt dabei besonders die Datenmenge mit der gleichen Priorität (In-Class Interference) eine Rolle, da diese potentiell die Übertragung verzögern kann. Die Zeiten bis eine Streamübertragung gestartet werden kann, kann durch den Preemption-Mechanismus, dem Pausieren einer Datenübertragung mit geringerer Priorität und späteren Fortsetzung, beschleunigt werden. Innerhalb der Klasse müssen jedoch alle ankommenden Datenpakete/Frames mit der gleichen Priorität von allen anderen Ports berücksichtigt werden, da innerhalb der Klasse keine weitere Differenzierung erfolgt. Für den Fall, dass mehrere Streamklassen existieren, kann es auch erforderlich sein, die Datenmenge anderer Klassen höherer Priorität zu berücksichtigten (Inter-Class Interference), da diese ebenfalls vorher gesendet würden bzw. werden.

Ist weder das Netz noch der Kommunikationsbedarf, der insbesondere durch die Kommunikationsbeziehungen, das Aktualisierungsintervall und die Bandbreite festgelegt ist, bekannt, muss bei der inkrementellen Pfadetablierung gegen den Worst Case geprüft werden. Das heißt, an jedem Egressport P (auch als Sende- bzw. Ausgangsport bezeichnet) auf dem Pfad P1, P2 muss angenommen werden, dass er maximal belegt sein wird, auch wenn nur ein Pfad P1, P2 über den Egressport P etabliert wird. Maximale Belegung bedeutet, dass davon ausgegangen wird, dass an jedem Sendeport P die (für die gegebenen Streamklasse) maximal mögliche Verzögerung auftritt. Im Worst-Case-Szenario ist davon auszugehen, dass an jedem Sendeport P alle Pakete, die ggf. vorher dran sein können, tatsächlich zuerst gesendet würden. In diesem Zusammenhang kennt TSN die Größen In-Class Interference sowie Inter-Class Interferenz.

Im Zusammenhang mit FIG 1 bedeutet dies, dass, obwohl nur A und B miteinander kommunizieren, an jedem Egressport P bisher mit der maximalen Belegung bzw. maximalen Belastung gerechnet werden muss, da jederzeit nachträglich weitere Teilnehmer - beispielsweise Y und Z hinzukommen könnten, die die restliche Bandbreite konsumieren. Dies gilt für jede Bridge B1 bis B5 auf den Strecken. In dem Beispiel gemäß FIG 1 haben die beiden Pfade P1 und P2 als Sendeport zwar nur den in der Figur rechten Port der Bridge B1 gemeinsam. Da beliebige andere Teilnehmer mit anderen Pfaden hinzukommen könnten, gilt dies für alle Knoten B1 bis B5 und deren Ports P.

In der FIG 1 sind nur die zu den beiden Pfaden P1, P2 gehörigen Egressports P der Knoten B1 bis B5 dargestellt, wobei die Sendeports P von Pfad P1 ohne Schraffur, die Sendeports vom Pfad P2 mit Schraffur und der einzige beiden Pfaden P1, P2 gemeinsame Sendeport P doppelt schraffiert dargestellt ist. Die Knoten B1 bis B5 weisen neben den erkennbaren Ports P in hinlänglich vorbekannter Weise noch weitere Ports auf, u.a. die Ports, über welche jeweils empfangen wird.

Die Worst-Case-Annahme, dass die Sendeports P jeweils voll belegt sind, bedeutet bei dem dargestellten Ausführungsbeispiel, dass davon ausgegangen wird, dass sich die maximale Verzögerung/Latenz an jedem Sendeport auf die für Streamdaten vorgesehenen 200 Mikrosekunden abzüglich derjenigen Zeit belaufen, die benötigt wird, um ein Paket (maximaler Größe) des jeweils betrachteten Streams bzw. der betrachteten Kommunikationsbeziehung zu senden, für welche die Latenzberechnung erfolgt. Geht man davon aus, dass das Netzwerk ein 1 GBit-Netzwerk ist, und Streamdatenpakete einer Größe beispielsweise 1500 Byte von A an B (bzw. Y an Z) zu senden sind, würde sich die zum Senden eines Paketes erforderliche Zeit jeweils auf etwa 12 Mikrosekunden belaufen. Die maximale Verzögerung/Latenz an dem jeweiligen Sendeport würde sich entsprechend 200 Mikrosekunden abzüglich 12 Mikrosekunden, also 188 Mikrosekunden belaufen.

Werden die für die Streamübertragung maximal vorgesehenen 200 Mikrosekunden von den tatsächlich bestehenden Kommunikationsbeziehungen im Betrieb nicht vollständig genutzt, erhält man über die Worts-Case-Betrachtung eine maximale Latenz, die - ggf. deutlich - oberhalb der tatsächlichen liegt und eigentlich freie Ressourcen können nicht genutzt werden.

Eine Alternative könnte nach Auffassung der Anmelderin darin besteht darin, dass alle Stream-Kommunikationsbeziehungen vorab bekannt sind bzw. bekannt gemacht werden und alle Pfade vorab, insbesondere bei der initialen Einrichtung des Netzwerkes noch vor der eigentlichen Datenübertragung, statisch geladen und etabliert werden. Dann können die tatsächlichen, sich infolge der bekannten Stream-Kommunikationsbeziehungen ergebenden Verzögerungen/Latenzen, insbesondere über die bzw. unter Berücksichtigung der In-Class Interference und/oder Inter-Class Interference berechnet werden. Dieser Fall ist - wiederum rein schematisch und beispielhaft - in FIG 2 angedeutet. Diese zeigt - in Analogie zu FIG 1 - die fünf Bridges sowie die Stream-Kommunikationsteilnehmer A und B. In dem gezeigten Szenario nehmen mit Y1 bis Y3 sowie Z1 bis Z5 jedoch einige weitere Stream-Kommunikationsteilnehmer teil. Geht man davon aus, dass hier alle Knoten B1 bis B5 und alle Stream-Kommunikationsbeziehungen bekannt sind, kann an jedem Egressport P die In-Class Interference und die Inter-Class Interference bestimmt werden. Da alles vorab bekannt ist und keine weiteren Knoten oder Kommunikationsbeziehungen hinzukommen, kann das optimale Scheduling und der optimale Netzwerkzyklus bestimmt werden. Es besteht jedoch keinerlei Flexibilität. Jede Art von Änderung würde zu einer Unterbrechung der Kommunikation und einer kompletten Neuberechnung führen.

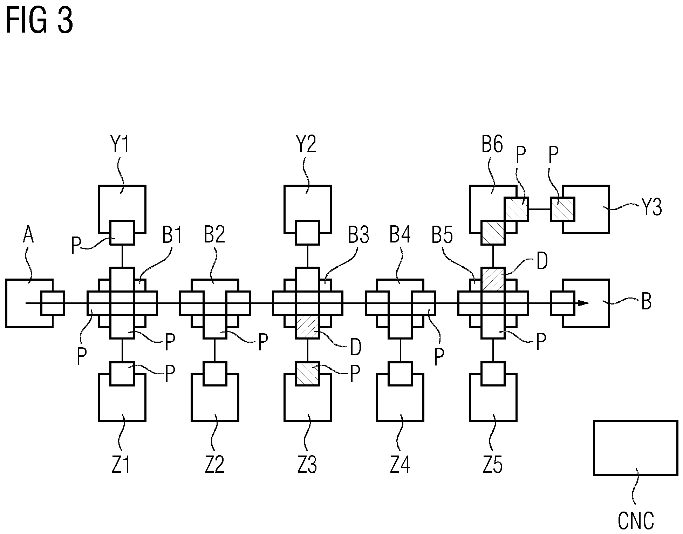

Um diese Problematik zu überwinden, wird das im Folgenden unter Bezugnahme auf FIG 3 beschriebene Ausführungsbeispiel des erfindungsgemäßen Verfahrens durchgeführt.

Dafür wird in einem ersten Schritt eine Information über Stream-Kommunikationsbeziehungen zwischen jeweils zwei Stream-Kommunikationspartnern, zwischen denen Streamdaten auf einem Pfad in dem Netzwerk übertragen werden sollen, vorab bereitgestellt.

Beispielsweise wird die Information bereitgestellt, dass A an B und Y1 an Z2 und Z3, Y2 an Z1 und Z5 Streamdaten senden möchte, welche Datenmengen im Rahmen der jeweiligen Kommunikationsbeziehung zu übertragen ist, welches Aktualisierungsintervall der jeweiligen Kommunikationsbeziehung zugeordnet ist, und welche maximale akkumulierte Latenz für die jeweilige Kommunikationsbeziehung erlaubt ist.

Die zu diesen bekannten Stream-Kommunikationsbeziehungen gehörigen, jeweils die zwei Stream-Kommunikationspartner A, B, Y1, Y2, Z1, Z2, Z4, Z5 verbindenden Pfade werden inkrementell etabliert. Konkret werden diese auf Bedarf jeweils dann etabliert, wenn eine entsprechende Anfrage von einem der jeweiligen beiden Stream-Kommunikationspartner der jeweiligen Stream-Kommunikationsbeziehung an eine zentrale Netzwerksteuerung CNC gestellt wird. Vorliegend kommen die Anfragen jeweils von dem Talker, also A, Y1 bzw. Y2.

Es werden für die Stream-Kommunikationsbeziehungen jeweils maximale Verzögerungen/Latenzen, von denen die Stream-Datenpakete an den Sendeports P der beteiligten Netzwerkknoten B1 bis B5 betroffen sein können, ermittelt. Die Ermittlung der Verzögerungen erfolgt dabei nicht unter Annahme des Worst-Case-Szenarios, also unter Annahme der vollen Belegung, sondern unter Betrachtung der sich infolge der bekannten Stream-Kommunikationsbeziehungen tatsächlich maximal ergebenden Belegungen an den beteiligten Sendeports P. Mit anderen Worten werden anstelle des Worst-Case-Szenarios die realen Belegungen bestimmt und bei der Latenzberechnung berücksichtigt. Dies erfolgt bei dem dargestellten Ausführungsbeispiel durch den CNC.

Als die sich infolge der bekannten Stream-Kommunikationsbeziehungen maximal ergebende Belegungen der Sendeports P wird dabei derjenige Anteil der für Stream-Kommunikationsbeziehungen insgesamt vorgesehenen Bandbreite des jeweiligen Sendeports betrachtet, welcher von den bekannten Stream-Kommunikationsbeziehungen belegt ist bzw. wird bzw. würde.

Zusätzlich werden an Ports mehrerer Netzwerkknoten B1 bis B6 zusätzliche Reserve-Belegung für eine unbekannte, noch hinzukommende Stream-Kommunikationsbeziehung vorgesehen, und bei der Ermittlung der Verzögerungen werden sowohl die sich infolge der bekannten Stream-Kommunikationsbeziehungen maximal ergebenden Belegungen als auch die die Reserve-Belegungen berücksichtigt.

Es werden Anschluss- bzw. Docking-Punkte D definiert, welche Ports P darstellen, an denen zusätzliche Knoten und Kommunikationsbeziehungen dynamisch hinzukommen dürfen. Bei dem gezeigten Beispiel werden zwei Docking-Punkte D festgelegt, konkret der in der FIG 3 untere Port von B3 und der obere Port von B5. In der FIG 3 sind die beiden Docking-Punkte bzw. -Ports D mit Rechtsschraffur und die Sendeports P der nachfolgend angeschlossenen Geräte, also die aufgrund der neuen Teilnehmer an den Docking-Ports D hinzukommenden Ports P mit Linksschraffur markiert.

An den die beiden Docking-Punkte D bildenden Ports wird jeweils eine zusätzliche Reserve-Belegung für wenigstens eine noch dynamisch hinzukommende Stream-Kommunikationsbeziehung vorgesehen. Als Reserve-Belegung wird ein fest vorgegebener Anteil der für Stream-Kommunikationsbeziehungen insgesamt vorgesehenen Netzwerkressource (vorliegend der 200 Mikrosekunden) vorgesehen. Es können beispielsweise 10%, also 20 Mikrosekunden vorgesehen werden. Andere Anteile sind ebenfalls möglich. Eine entsprechende Reserve-Belegung wird ferner an allen Sendeports P vorgesehen, die auf dem Pfad für die wenigstens eine Stream-Kommunikationsbeziehung liegen, die über die Docking-Ports D dynamisch hinzukommen darf. Bei dem dargestellten Ausführungsbeispiel kommt an dem unteren Docking-Port D von B3 der Teilnehmer Z3 hinzu und an dem oberen Port D von B5 eine weitere Bridge B6 und dahinter der Teilnehmer Y3 hinzu. Y3 soll an Z3 Stream-Daten senden (neue Stream-Kommunikationsbeziehung) und Reserve-Belegungen werden an allen Sendeports P auf dem Y3 und Z3 verbindenden Pfad vorgesehen. Die Information, dass Y3 an Z3 (später) senden möchte/darf, wird bereitgestellt, konkret zusammen mit der Information über die vorgenannten drei Stream-Kommunikationsbeziehungen, an denen die anderen Teilnehmer, also A, B, Y1, Y2, Z1, Z2, Z4 und Z5 beteiligt sind.

Der Anschluss weiterer Stream-Kommunikationsteilnehmer wird nur an den beiden als Docking-Punkte D definierten Ports zugelassen, für die die zusätzliche Reserve-Belegung extra für diesen Zweck vorgesehen ist. Solche können dann hinzukommen, ohne die bereits bekannten Stream-Kommunikationsbeziehungen zu stören und ohne dass eine Unterbrechung der Kommunikation und komplette Neuberechnung erforderlich ist.

Durch die Hinzufügung der (definierten) Reserve für zum Erstellungszeitpunkt noch unbekannte Stream-Kommunikationsbeziehungen kann die Unterstützung der Dynamik gut erhalten bleiben und gleichzeitig auf ein erforderliches Mindestmaß beschränkt werden.

Anfragen für weitere, neu hinzukommende Stream-Kommunikationsbeziehungen an den Docking-Stellen D, welche mit der Reserve-Belegung nicht auskommen, werden zweckmäßiger Weise abgelehnt.

Es sei angemerkt, dass es alternativ zu dem dargestellten Ausführungsbeispiel auch möglich ist, an allen Ports aller Knoten B1-B5 eine Reserve-Belegung vorzusehen und diese bei der Latenzberechnung zu berücksichtigen. Dann muss nicht örtlich eingeschränkt werden, wo weitere, zum Erstellungszeitpunkt noch unbekannte Teilnehmer von Stream-Kommunikationsbeziehungen angeschlossen werden dürfen. In diesem Fall dürfen an allen Stellen noch Stream-Teilnehmer hinzukommen, welche den für Stream-Daten vorgesehenen Anteil der Netzwerkressourcen, insbesondere Bandbreite ebenfalls - zumindest in dem Umfang der Reserve-Belegung - nutzen dürfen. Über diese Variante wird die größtmögliche räumliche Flexibilität erhalten, was das Hinzufügen weiterer Geräte angeht. Sofern im Vorfeld begrenzt werden kann, wo weitere Stream-Teilnehmer erforderlich werden (können), ist die Variante mit vorgegebenen Docking-Stellen D besonders vorteilhaft.

Durch die Definition von Docking-Punkten D kann die Latenzberechnung noch weiter optimiert werden, da Bereiche des Netzes, die von neu angeschlossenen Geräten nicht betroffen sein können bzw. sind, keine Reserven brauchen.

Weiterhin sei angemerkt, dass es alternativ zu dem beschriebenen Ausführungsbeispiel prinzipiell auch möglich ist, dass von Anfang an Informationen über sämtliche Stream-Kommunikationsbeziehungen bereitgestellt werden. Sind sämtliche Kommunikationsbeziehungen von Anfang an bekannt, muss kein "Puffer" für ggf. noch hinzukommende Streams vorgehalten werden und auf Reserve-Belegungen an den Docking-Stellen D kann in diesem Fall verzichtet werden.

Im Rahmen der inkremetellen Etablierung der Pfade für die Stream-Kommunikationsbeziehungen werden dann bei der Prüfung, ob die maximal zulässige Latenz eingehalten werden kann, die unter Betrachtung der sich infolge der bekannten Stream-Kommunikationsbeziehungen maximal ergebenden Belegungen und der Reserve-Belegungen an den beteiligten Sendeports ermittelten maximalen Verzögerungen/Latenzen berücksichtigt. Reserve-Belegungen sind bei dem dargestellten Beispiel nur an den beiden Docking-Stellen bzw. -Ports D zu berücksichtigen. An den verbleibenden Sendeports P sind jeweils nur die sich infolge der bekannten Stream-Kommunikationsbeziehungen ergebenden Belegungen zu berücksichtigen.

An jedem Egressport P kann die In-Class Interference und die Inter-Class Interference aufgrund der tatsächlichen, realen Belegung und der gezielt vorgesehenen Reserve (nicht einer Worst-Case-Annahme) bestimmt werden, da die statischen Informationen für alle Sendeports P und die Maximalwerte für dynamisch hinzukommende Stream-Kommunikationsbeziehungen an den vorgegebenen Punkten D bekannt sind.

Im Ergebnis kann Flexibilität im Betrieb dort, wo sie gebracht wird, und gleichzeitig ein optimales Scheduling für den größten Teil des Netzwerkes erhalten werden. Dadurch, dass man alle zu sendenden Pakete und die Topologie kennt, kann diese Information für ein optimales Scheduling genutzt werden. Je mehr Daten zur Verfügung stehen, desto besser kann das Ergebnis werden.

Es sei angemerkt, dass das in FIG 3 dargestellte Netzwerk ein Ausführungsbeispiel eines erfindungsgemäßen Netzwerks ist, welches zur Durchführung des beschriebenen Ausführungsbeispiels des erfindungsgemäßen Verfahrens ausgebildet und eingerichtet ist. Die in FIG 3 dargestellte zentrale Netzwerksteuereinrichtung CNC ist ein Ausführungsbeispiel einer erfindungsgemäßen Netzwerksteuereinrichtung, die zur Durchführung des beschriebenen Ausführungsbeispiels des erfindungsgemäßen Verfahrens ausgebildet und eingerichtet ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenkommunikation in einem insbesondere industriellen AVB- bzw. TSN-Netzwerk mit mehreren Netzwercknoten (B1-B6), bei dem
a) eine Information über Stream-Kommunikationsbeziehungen zwischen jeweils zwei Stream-Kommunikationspartnern (A, B, Y1-Y3, Z1-Z5), zwischen denen Streamdaten auf einem Pfad (P1, P2) in dem Netzwerk übertragen werden sollen, vorab bereitgestellt wird,
b) die zu diesen bekannten Stream-Kommunikationsbeziehungen gehörigen, jeweils die zwei Stream-Kommunikationspartner (A, B, Y1-Y3, Z1-Z5) verbindenden Pfade auf Bedarf jeweils dann etabliert werden, wenn eine entsprechende Anfrage insbesondere von einem der beiden Stream-Kommunikationspartner (A, B, Y1-Y3, Z1-Z5) der jeweiligen Stream-Kommunikationsbeziehung gestellt wird, und
c) für die Stream-Kommunikationsbeziehungen jeweils die maximalen Verzögerungen, von denen die Stream-Datenpakete an den Sendeports (P) der beteiligten Netzwerkknoten (B1-B6) betroffen sein können, ermittelt werden, wobei die Ermittlung der Verzögerungen unter Betrachtung der sich infolge der bekannten Stream-Kommunikationsbeziehungen maximal ergebenden Belegungen an den beteiligten Sendeports (P) erfolgt.

2. Verfahren nach Anspruch 1,
**dadurch gekennzeichnet, dass** für einen oder mehrere Sendeports (P) zumindest eines Netzwerkknotens (B1-B6) eine zusätzliche Reserve-Belegung für wenigstens eine unbekannte, noch hinzukommende Stream-Kommunikationsbeziehung vorgesehen wird, und bei der Ermittlung der Verzögerungen sowohl die sich infolge der bekannten Stream-Kommunikationsbeziehungen maximal ergebenden Belegungen als auch die Reserve-Belegung oder die Reserve-Belegungen berücksichtigt werden.

3. Verfahren nach Anspruch 2,
**dadurch gekennzeichnet, dass** für einen oder mehrere Sendeports (P) mehrerer, insbesondere aller Netzwerkknoten (B1-B6) eine zusätzliche Reserve-Belegung vorgesehen wird, und bei der Ermittlung der Verzögerungen sowohl die sich infolge der bekannten Stream-Kommunikationsbeziehungen maximal ergebenden Belegungen als auch die Reserve-Belegungen berücksichtigt werden.

4. Verfahren nach Anspruch 2 oder 3,
**dadurch gekennzeichnet, dass** als Reserve-Belegung ein fest vorgegebener Anteil einer für Stream-Kommunikationsbeziehungen insgesamt vorgesehenen Netzwerkressource, insbesondere Bandbreite vorgesehen wird.

5. Verfahren nach einem der Ansprüche 2 bis 4,
**dadurch gekennzeichnet, dass** der Anschluss weiterer Stream-Kommunikationsteilnehmer (A, B, Y1-Y3, Z1-Z5) und/oder Netzwerkknoten (B1-B6) und/oder das Hinzukommen weiterer Stream-Kommunikationsbeziehungen nur an Ports (D) zugelassen werden bzw. wird, für die eine zusätzliche Reserve-Belegung vorgesehen ist.

6. Verfahren nach einem der Ansprüche 2 bis 5,
**dadurch gekennzeichnet, dass** wenigstens ein Port wenigstens eines Netzwerkknotens als Docking-Port (D) festgelegt wird, und an dem wenigstens einen Docking-Port eine Reserve-Belegung vorgesehen wird und das Hinzukommen von weiteren Stream-Kommunikationsbeziehungen nur an dem bzw. über den wenigstens einen Docking-Port (D) erlaubt wird.

7. Verfahren nach einem der vorhergehenden Ansprüche,
**dadurch gekennzeichnet, dass** im Rahmen der Etablierung eines Pfades für wenigsten eine Stream-Kommunikationsbeziehung, bevorzugt für alle Stream-Kommunikationsbeziehungen, bei der Prüfung, ob die maximal zulässige Latenz eingehalten werden kann, die in Schritt c) unter Betrachtung der sich infolge der bekannten Stream-Kommunikationsbeziehungen maximal ergebenden Belegungen an den beteiligten Sendeports (P) ermittelten maximalen Verzögerungen berücksichtigt werden.

8. Verfahren nach Anspruch 7 und einem der Ansprüche 2 bis 6,
**dadurch gekennzeichnet, dass** im Rahmen der Etablierung eines Pfades für wenigsten eine Stream-Kommunikationsbeziehung, bevorzugt für alle Stream-Kommunikationsbeziehungen, bei der Prüfung, ob die maximal zulässige Latenz eingehalten werden kann, die in Schritt c) unter Betrachtung der sich infolge der bekannten Stream-Kommunikationsbeziehungen maximal ergebenden Belegungen und der Reserve-Belegungen an den beteiligten Sendeports (P) ermittelten maximalen Verzögerungen berücksichtigt werden.

9. Verfahren nach einem der vorhergehenden Ansprüche,
**dadurch gekennzeichnet, dass** als die sich infolge der bekannten Stream-Kommunikationsbeziehungen maximal ergebende Belegung eines Sendeports (P) derjenige Anteil einer für Stream-Kommunikationsbeziehungen insgesamt vorgesehenen Netzwerkressource, insbesondere Bandbreite des Sendeports (P) betrachtet wird, welcher von den bekannten Stream-Kommunikationsbeziehungen belegt ist.

10. Verfahren nach einem der vorhergehenden Ansprüche,
**dadurch gekennzeichnet, dass** in Schritt a) Informationen über sämtliche Stream-Kommunikationsbeziehungen bereitgestellt werden.

11. Verfahren nach einem der vorhergehenden Ansprüche,
**dadurch gekennzeichnet, dass** die In-Class Interferenz und/oder die Inter-Class Interferenz, insbesondere gemäß IEEE 802.1Qccberechnet und bei der Ermittlung der Verzögerungen, insbesondere als Belegungen der Sendeports bzw. eine diese repräsentierende Größe berücksichtigt werden.

12. Netzwerksteuereinrichtung (CNC), die zur Durchführung des Verfahrens nach einem der Ansprüche 1 bis 11 ausgebildet und eingerichtet ist.

13. Netzwerk, insbesondere für eine Automatisierungsanlage und/oder Fertigungsanlage, das zur Durchführung des Verfahrens nach einem der Ansprüche 1 bis 11 ausgebildet und eingerichtet ist.

14. Computerprogramm umfassend Programmcode-Mittel zur Durchführung des Verfahrens nach einem der Ansprüche 1 bis 11.

15. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 11 durchzuführen.
